# EUROPEAN PATENT APPLICATION

(11) **EP 3 968 309 A1**
(43) Date of publication of application: **16.03.2022**
(21) Application number: 21194532.4
(22) Date of filing: 02.09.2021
(51) Int. Cl.: G08G 5/00, G06Q 10/00

(54) **SYSTEMS AND METHODS FOR PROVIDING CONFORMANCE VOLUME BASED AIRSPACE ACCESS**

(30) Priority: 14.09.2020 US 202017020149
(71) Applicant: GE Aviation Systems LLC, Grand Rapids, MI 49512 (US)
(72) Inventor: LESTER, Edward, Grand Rapids, 49512 (US)
(74) Representative: Openshaw & Co.

(57) **Abstract**

Disclosed herein are embodiments for providing conformance volume based airspace access. Some embodiments include receiving data related to a route from an origination location to a destination location (550), receiving data related to a vehicle (102) that will traverse the route (550), and determining an airspace volume from the origination location to the destination location along the route, where the airspace volume is based on at least a portion of the route data and at least a portion of the vehicle data (552). Some embodiments calculate a cost of the airspace volume and provide the cost to a user (554).

## Description

### FIELD

The present disclosure relates to devices, systems, methods, and non-transitory computer-readable mediums for providing conformance volume based airspace access, and more specifically, for allocating airspace access based on an economic model.

### BACKGROUND

As technology advances, UASs are being utilized more frequently in a variety of contexts. As these UASs are increasing in popularity, airspace for UASs (and all aircraft) becomes more limited. Specifically, in a UAS Traffic Management (UTM) ecosystem, there is the problem of operators creating conformance volumes for more airspace than they need. By doing so, this blocks other airspace users from reserving that space.

Additionally, current UTM research and development efforts led by NASA and the FAA plus future UTM concepts of operations do not provide a mechanism to limit operators from reserving large swaths of airspace that blocks other users. Individual conformance volumes may be limited in size, but operators are not limited with the number of volumes they can reserve. As such, a need for providing conformance volume based airspace access exists in the industry.

### SUMMARY

Disclosed herein are embodiments for providing conformance volume based airspace access. Some embodiments include receiving data related to a route from an origination location to a destination location, receiving data related to a vehicle that will traverse the route, and determining an airspace volume from the origination location to the destination location along the route, where the airspace volume is based on at least a portion of the route data and at least a portion of the vehicle data. Some embodiments calculate a cost of the airspace volume and provide the cost to a user.

In an embodiment, a system includes a computing device that includes a processor and a memory component, the memory component storing logic that, when executed by the processor causes the system to receive data related to a route from an origination location to a destination location, receive data related to a vehicle that will traverse the route, and determine an airspace volume from the origination location to the destination location along the route, where the airspace volume is based on at least a portion of the route data and at least a portion of the vehicle data. In some embodiments, the logic further causes the system to calculate a cost of the airspace volume and provide the cost to a user.

In an embodiment, a non-transitory computer-readable medium includes logic for execution by a computing device, the logic configured to cause the computing device to receive data related to a route for a vehicle from an origination location to a destination location, receive data related to the vehicle that will traverse the route, and determine an airspace volume from the origination location to the destination location along the route, where the airspace volume is based on at least a portion of the route data and at least a portion of the vehicle data. In some embodiments, the logic causes the computing device to calculate a cost of the airspace volume, provide the cost to a user, receive a user request to secure the airspace volume for the vehicle, and secure the airspace volume for the vehicle.

These and other features, and characteristics of the present technology, as well as the methods of operation and functions of the related elements of structure and the combination of parts and economies of manufacture, will become more apparent upon consideration of the following description and the appended claims with reference to the accompanying drawings, all of which form a part of this specification, wherein like reference numerals designate corresponding parts in the various figures. It is to be expressly understood, however, that the drawings are for the purpose of illustration and description only and are not intended as a definition of the limits of the invention. As used in the specification and in the claims, the singular form of 'a', 'an', and 'the' include plural referents unless the context clearly dictates otherwise.

### BRIEF DESCRIPTION OF THE DRAWINGS

FIG. 1 schematically depicts a network environment for providing conformance volume based airspace access, according to one or more embodiments shown and described herein;
FIG. 2 schematically depicts a user interface for requesting an air volume, according to one or more embodiments shown and described herein;
FIG. 3 schematically depicts a user interface for determining air volume cost, according to one or more embodiments shown and described herein;
FIG. 4 depicts a user interface for providing air volume cost allocation, according to one or more embodiments shown and described herein;
FIG. 5 depicts a flowchart for securing four-dimensional airspace, according to one or more embodiments shown and described; and
FIG. 6 depicts a remote computing device that may be utilized for providing conformance volume based airspace access, according to embodiments described herein.

### DETAILED DESCRIPTION

The present disclosure generally relates to devices, systems, and methods for conformance volume based airspace access. Specifically, the devices, systems, and methods described herein may provide a UTM service that records all operational volumes distributed by one or more UTM Service Suppliers (USS). Some embodiments may provide a component that measures the airspace volumes used and determines charges. Some embodiments may provide a payment system to bill and collect charges, either via USSs or directly with operators.

Similarly, some embodiments may be configured to provide a dynamic pricing model that is based on current and/or expected use of various airspace. Notification may be provided to USSs of current pricing. The pricing model may help distribute flights over time. Some embodiments may be configured with a cap-and-trade component that would allocate the full airspace volume via airspace volume credits, allowing USSs or operators to trade their allocations to allow the market to allocate airspace efficiently.

Accordingly, embodiments provided herein may be configured to charge operators for conformance volumes that are reserved based on the horizontal size, vertical size, and duration of the volume. These embodiments may be configured to measure the volume sizes reserved and assign the appropriate charges. These embodiments may include a payment system to bill, collect, and distribute the charges appropriately. The payment system may be connected with operators, through the USSs, and/or through some other UTM payment clearinghouse.

Some embodiments may be configured for setting a dynamic airspace pricing. These embodiments may be configured such that pricing may vary based on current and/or expected use of the airspace. This would encourage operators to fly at off-peak times and/or in unused airspace. A cap-and-trade mechanism could also be used to allocate airspace then allow operators or USSs to trade allocations to increase the efficient allocation of airspace. With a cap-and-trade system, airspace volume credits could be used instead of physical currency to eliminate any fee or tax element of the fair airspace allocation.

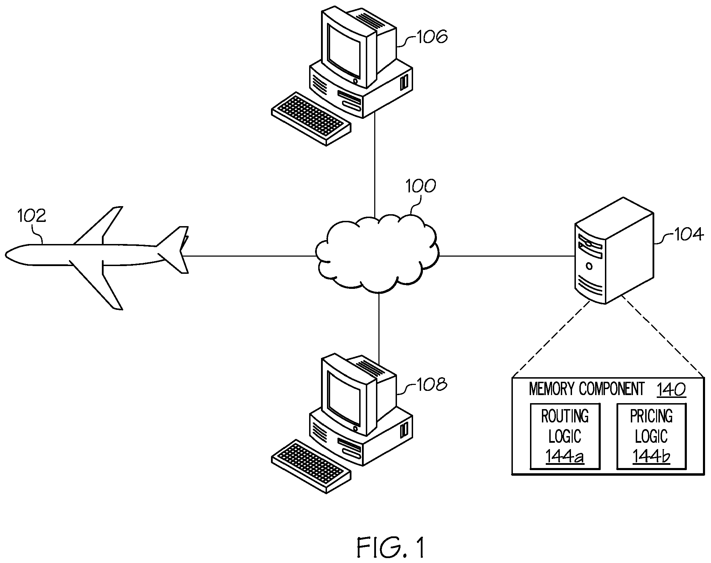

Referring now to the drawings, FIG. 1 schematically depicts a network environment for providing conformance volume based airspace access, according to one or more embodiments shown and described herein. As illustrated, the network environment may include a network 100, such as the internet, public switched telephone network, mobile telephone network, mobile data network, local network (wired or wireless), peer-to-peer connection, and/or other network for providing the functionality described herein.

Coupled to the network 100 are a vehicle 102, a remote computing device 104, a user computing device 106, and a vehicle computing device 108. The vehicle 102 may be configured as any aerial vehicle, such as an airplane, helicopter, drone, etc. The vehicle 102 may be configured with a computing device that includes a memory component storing logic, similar to that described above in reference to the remote computing device 104. Depending on the particular embodiment, the vehicle computing device 108 may be remote from the vehicle 102 (e.g., a ground control station) and/or may be local to the vehicle 102

Also coupled to network 100 is the remote computing device 104 The remote computing device 104 represents one or more different computing devices for providing the functionality provided herein and, as such, may be configured as a server, a personal computer, tablet, database, mobile device, and/or other computing device for providing the functionality described herein. Specific examples include the UTM system, a USS system, a mapping system, a third party computing device, a system for providing conformance volume based airspace access, and/or other computing device. The remote computing device 104 may include a memory component 140, which may store routing logic 144a and pricing logic 144b. The routing logic 144a may be configured to cause the remote computing device 104 to determine and/or communicate one or more routes, altitudes, and/or timing the vehicle 102 may take. It should be understood that the term "route" as used herein may refer to any of a two-dimensional route, a three-dimensional route (e.g., including altitude), and/or a four-dimensional route (e.g., including altitude and timing). Similarly, the pricing logic 144b may be configured to cause the remote computing device 104 to determine a price for the vehicle 102 to take that route, as described in more detail below.

Also coupled to the network 100 is the user computing device 106. The user computing device 106 may represent one or more computing device that is operated by a user (or pilot) of the vehicle 102. As will be understood, the user computing device 106 may include hardware and/or software, similar to that described in reference to the remote computing device 104. In some embodiments, the user may input a origination and/or destination point for determining a flight plan. Additionally, some embodiments may provide information on current flight plans of the vehicle 102 and/or other vehicles.

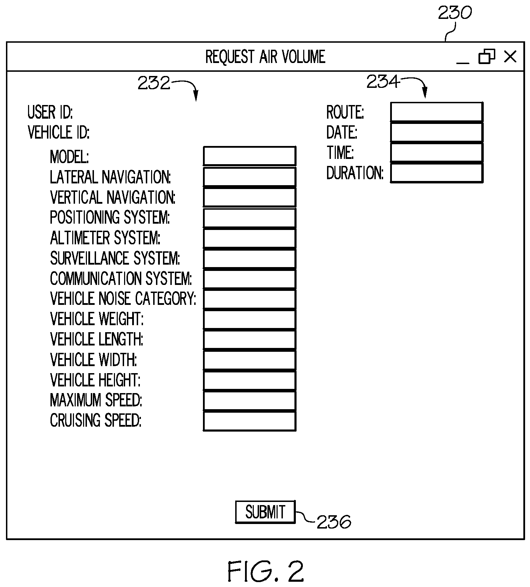

FIG. 2 schematically depicts a user interface 230 for requesting an air volume, according to one or more embodiments shown and described herein. As illustrated, the user interface 230 includes one or more fields 232, 234 for a user to request air volume. The fields 232 include user identifier, vehicle identifier, vehicle model, lateral navigation system(s), vertical navigation system(s), positioning system(s), altimetry system(s), surveillance system(s), communication systems(s), vehicle noise category, vehicle weight, vehicle length/width/height, maximum speed, and/or cruising speed. The fields 232 allow the user to provide information related to the vehicle 102. By understanding the specifications of the vehicle 102, the remote computing device 104 can determine the expected accuracy to a route the vehicle 102 will experience. Specifically, if the remote computing device 104 determines that the navigation system is an inaccurate system; more airspace volume will need to be acquired for the vehicle 102 to traverse the route. Similarly, if the vehicle 102 has a high cruising speed, the time dimension of the four-dimensional airspace request may be shortened.

Similarly, the fields 234 may include route path (and/or area of operation), date, time, and duration. Similar to the vehicle specifications 432, these route specifications may be utilized by the remote computing device 104 to determine the airspace volume request. As an example, based on the time input, the remote computing device 104 may determine airspace congestion. This determination may be made based on historical airspace congestion and/or based on current reservations for the airspace at that time. After entering (and/or the remote computing device 104 populating) the information into the fields 232, 234, the user may select a submit option 236.

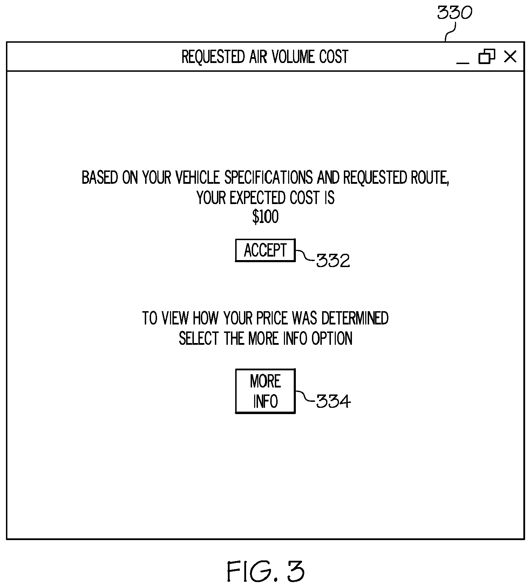

FIG. 3 schematically depicts a user interface 330 for determining air volume cost, according to one or more embodiments shown and described herein. As illustrated, the user interface 330 provides a cost for the airspace requested from the user interface 230 (FIG. 2). If the user accepts the calculated amount, the user may select an accept option 332. To view specifics on how the amount was calculated, the user may select the more info option 334.

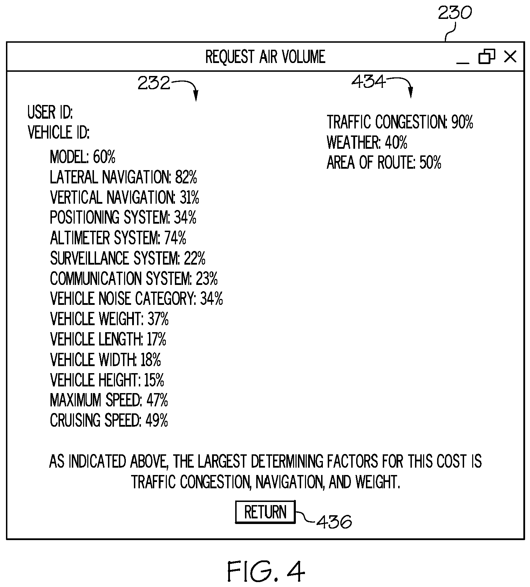

FIG. 4 depicts a user interface 430 for providing air volume cost allocation, according to one or more embodiments shown and described herein. As illustrated, the user interface 430 provides vehicle specifications 432 and route specifications 434. Specifically, the vehicle specifications 432 may provide one or more of the vehicle specifications in the fields 232 provided in the user interface 230 from FIG. 2, as well as a weighted assessment to which that specification affected the cost. In the example of FIG. 4, a percentage is given, however other metrics may be used for providing the relative weight for each specification. Similarly, the route specifications 434 may include one or more of the fields 234 from FIG. 2 and may provide a relative weight each specification was given in the total cost.

The information provided in FIG. 4 may be beneficial to a user by allowing the user to know what he/she can do to reduce the airspace costs. In the example of FIG. 4, the lateral navigation system was assigned a weight of 82%, which was the highest weight for the vehicle specifications 432. As such, the user can determine that upgrading the lateral navigation system of the vehicle 102 would likely have a significant impact in reducing the cost of airspace. As such, some embodiments may be configured for the user to adjust the vehicle specifications 432 and/or vehicle 102 in the user interface 430, allowing for a cost-benefit analysis of upgrading costs versus airspace costs prior to the user taking such action.

Similarly, the user may also be able to determine how to improve the airspace cost, based on the weights assigned to the route specifications 434. In the example of FIG. 4, traffic congestion was the largest contributor to the cost, so changing the time the vehicle 102 enters a congested area along the route (or rerouting around) might reduce the cost.

It should be understood that some embodiments may be configured such that requesting airspace in advance may provide a lower cost to the user because the airspace may be less congested when the reservations are made. However, advanced scheduling may provide less certainty with regard to weather, thereby increasing costs. As stated above, some embodiments may utilize historical data for traffic congestion and/or weather data. Some embodiments may provide an expected cost, which may be updated closer to the time of flight when the weather and congestion data is more accurate.

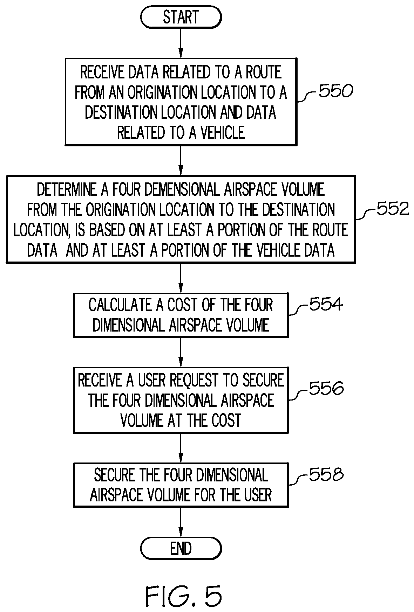

FIG. 5 depicts a flowchart for securing four-dimensional airspace, according to one or more embodiments shown and described. As illustrated in block 550, data related to a route may be received from an origination location to a destination location. Data related to a vehicle 102 may also be received. In block 552, a four-dimensional airspace volume from the origination location to the destination location may be determined, based on at least a portion of the route data and at least a portion of the vehicle data. In block 554, a cost of the four-dimensional airspace volume may be calculated. In block 556, a user request to secure the four-dimensional airspace volume at the cost may be received. In block 558, the four-dimensional airspace volume may be secured for the user.

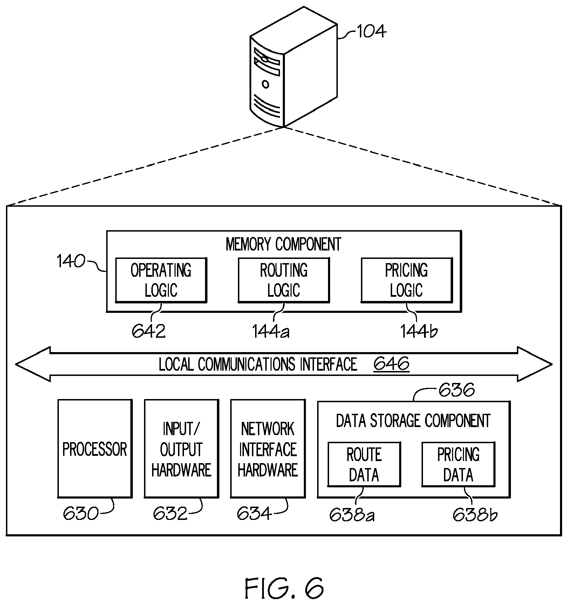

FIG. 6 depicts a remote computing device 104 that may be utilized for providing conformance volume based airspace access, according to embodiments described herein. As illustrated, the remote computing device 104 includes a processor 630, input/output hardware 632, network interface hardware 634, a data storage component 636 (which stores route data 638a, pricing data 638b, and/or other data), and the memory component 140. The memory component 140 may be configured as volatile and/or nonvolatile memory and as such, may include random access memory (including SRAM, DRAM, and/or other types of RAM), flash memory, secure digital (SD) memory, registers, compact discs (CD), digital versatile discs (DVD), and/or other types of non-transitory computer-readable mediums. Depending on the particular embodiment, these non-transitory computer-readable mediums may reside within the remote computing device 104 and/or external to the remote computing device 104.

The memory component 140 may store operating system logic 642, the routing logic 144a, and the pricing logic 144b. The routing logic 144a and the pricing logic 144b may each include a plurality of different pieces of logic, each of which may be embodied as a computer program or module, firmware, and/or hardware, as an example. A local interface 646 is also included in FIG. 6 and may be implemented as a bus or other communication interface to facilitate communication among the components of the remote computing device 104.

The processor 630 may include any processing component operable to receive and execute instructions (such as from a data storage component 636 and/or the memory component 140). As described above, the input/output hardware 632 may include and/or be configured to interface with the components of FIG. 6.

The network interface hardware 634 may include and/or be configured for communicating with any wired or wireless networking hardware, including an antenna, a modem, a LAN port, wireless fidelity (Wi-Fi) card, WiMAX card, mobile communications hardware, and/or other hardware for communicating with other networks and/or devices. From this connection, communication may be facilitated between the remote computing device 104 and other computing devices, such as those depicted in FIG. 1.

The operating system logic 642 may include an operating system and/or other software for managing components of the remote computing device 104. As discussed above, the routing logic 144a may reside in the memory component 140 and may be configured to cause the processor 630 to determine one or more emergency response zones, as described above. Similarly, the pricing logic 144b may be utilized to determine a route for a UAS and/or provide other similar functionality.

It should be understood that while the components in FIG. 6 are illustrated as residing within the remote computing device 104, this is merely an example. In some embodiments, one or more of the components may reside external to the remote computing device 104. It should also be understood that, while the remote computing device 104 is illustrated as a single device, this is also merely an example. In some embodiments, the routing logic 144a and the pricing logic 144b may reside on different computing devices. As another example, one or more of the functionalities and/or components described herein may be provided by a remote computing device 104, the user computing device 106, and/or other devices, which may be coupled to the remote computing device 104 via a network connection (wired or wireless). These devices may also include hardware and/or software for performing the functionality described herein.

Additionally, while the remote computing device 104 is illustrated with the routing logic 144a and the pricing logic 144b as separate logical components, this is also an example. In some embodiments, a single piece of logic may cause the hub to provide the described functionality.

While particular embodiments have been illustrated and described herein, it should be understood that various other changes and modifications may be made without departing from the spirit and scope of the claimed subject matter. Moreover, although various aspects of the claimed subject matter have been described herein, such aspects need not be utilized in combination. It is therefore intended that the appended claims cover all such changes and modifications that are within the scope of the claimed subject matter.

Further aspects of the invention are provided by the subject matter of the following clauses:

A method for method for providing conformance volume based airspace access, comprising: receiving, by a computing device, data related to a route from an origination location to a destination location; receiving, by the computing device, data related to a vehicle that will traverse the route; determining, by the computing device, an airspace volume from the origination location to the destination location along the route, wherein the airspace volume is based on at least a portion of the route data and at least a portion of the vehicle data; calculating, by the computing device, a cost of the airspace volume; receiving, by the computing device, a user request to secure the airspace volume for the vehicle; and securing, by the computing device, the airspace volume for the vehicle.

The method of any preceding clause, wherein the airspace volume includes a four-dimensional airspace volume.

The method of any preceding clause, wherein the data related to the route includes at least one of the following: route path, altitude, date, time, or duration.

The method of any preceding clause, wherein the data related to the vehicle includes at least one of the following: a user identifier, a vehicle identifier, a vehicle model, a lateral navigation system, a vertical navigation system, a positioning system, an altimetry system, a surveillance system, a communication system, a vehicle noise category, vehicle weight, a vehicle length, a vehicle width, a vehicle, height, a maximum speed, or a cruising speed.

The method of any preceding clause, wherein calculating the cost includes utilizing a dynamic pricing model that includes at least one of the following: current or expected use of airspace around the airspace volume by third parties.

The method of any preceding clause, further comprising providing, by the computing device, a cap-and-trade mechanism that includes airspace volume credits that users can exchange.

The method of any preceding clause, further comprising providing, by the computing device, a weighted assessment regarding calculation of the cost of the airspace volume.

A system for providing conformance volume based airspace access, comprising: a remote computing device that includes a processor and a memory component, the memory component storing logic that, when executed by the processor causes the system to perform at least the following: receive data related to a route from an origination location to a destination location; receive data related to a vehicle that will traverse the route; determine an airspace volume from the origination location to the destination location along the route, wherein the airspace volume is based on at least a portion of the route data and at least a portion of the vehicle data; calculate a cost of the airspace volume; and provide the cost to a user.

The system of any preceding clause, wherein the logic further causes the system to perform at least the following: receive a user request to secure the airspace volume for the vehicle; and secure the airspace volume for the vehicle.

The system of any preceding clause, wherein the airspace volume includes a four-dimensional airspace volume.

The system of any preceding clause, wherein the data related to the route includes at least one of the following: route path, altitude, date, time, or duration.

The system of any preceding clause, wherein the data related to the vehicle includes at least one of the following: a user identifier, a vehicle identifier, a vehicle model, a lateral navigation system, a vertical navigation system, a positioning system, an altimetry system, a surveillance system, a communication system, a vehicle noise category, vehicle weight, a vehicle length, a vehicle width, a vehicle, height, a maximum speed, or a cruising speed.

The system of any preceding clause, wherein calculating the cost includes utilizing a dynamic pricing model that includes at least one of the following: current or expected use of airspace around the airspace volume by third parties.

The system of any preceding clause, wherein the logic further causes the system to perform at least the following: provide a cap-and-trade mechanism that includes airspace volume credits that users can exchange.

The system of any preceding clause, wherein the logic further causes the system to perform at least the following: provide a weighted assessment regarding calculation of the cost of the airspace volume.

A non-transitory computer-readable medium for providing conformance volume based airspace access, the non-transitory computer-readable medium including logic for execution by a computing device, the logic configured to cause the computing device to perform at least the following: receive data related to a route for a vehicle from an origination location to a destination location; receive data related to the vehicle that will traverse the route; determine an airspace volume from the origination location to the destination location along the route, wherein the airspace volume is based on at least a portion of the route data and at least a portion of the vehicle data; calculate a cost of the airspace volume; provide the cost to a user; receive a user request to secure the airspace volume for the vehicle; and secure the airspace volume for the vehicle.

The non-transitory computer-readable medium of any preceding clause, wherein the data related to the route includes at least one of the following: route path, altitude, date, time, or duration.

The non-transitory computer-readable medium of any preceding clause wherein the data related to the vehicle includes at least one of the following: a user identifier, a vehicle identifier, a vehicle model, a lateral navigation system, a vertical navigation system, a positioning system, an altimetry system, a surveillance system, a communication system, a vehicle noise category, vehicle weight, a vehicle length, a vehicle width, a vehicle, height, a maximum speed, or a cruising speed.

The non-transitory computer-readable medium of any preceding clause wherein the logic further causes the system to perform at least the following: provide a cap-and-trade mechanism that includes airspace volume credits that users can exchange.

The non-transitory computer-readable medium of any preceding clause wherein the logic further causes the computing device to provide a weighted assessment regarding calculation of the cost of the airspace volume.

## Claims

1. A method for providing conformance volume based airspace access, comprising:
receiving, by a computing device, data related to a route from an origination location to a destination location;
receiving, by the computing device, data related to a vehicle that will traverse the route;
determining, by the computing device, an airspace volume from the origination location to the destination location along the route, wherein the airspace volume is based on at least a portion of the route data and at least a portion of the vehicle data;
calculating, by the computing device, a cost of the airspace volume;
receiving, by the computing device, a user request to secure the airspace volume for the vehicle; and
securing, by the computing device, the airspace volume for the vehicle.

2. The method of claim 1, wherein the airspace volume includes a four-dimensional airspace volume.

3. The method of any preceding claim, wherein the data related to the route includes at least one of the following: route path, altitude, date, time, or duration.

4. The method of any preceding claim, wherein the data related to the vehicle includes at least one of the following: a user identifier, a vehicle identifier, a vehicle model, a lateral navigation system, a vertical navigation system, a positioning system, an altimetry system, a surveillance system, a communication system, a vehicle noise category, vehicle weight, a vehicle length, a vehicle width, a vehicle, height, a maximum speed, or a cruising speed.

5. The method of any preceding claim, wherein calculating the cost includes utilizing a dynamic pricing model that includes at least one of the following: current or expected use of airspace around the airspace volume by third parties.

6. The method of any preceding claim, further comprising providing a cap-and-trade mechanism that includes airspace volume credits that users can exchange.

7. The method of any preceding claim, further comprising providing a weighted assessment regarding calculation of the cost of the airspace volume.

8. A system for providing conformance volume based airspace access, comprising:
a remote computing device that includes a processor and a memory component, the memory component storing logic that, when executed by the processor causes the system to perform at least the following:
receive data related to a route from an origination location to a destination location;
receive data related to a vehicle that will traverse the route;
determine an airspace volume from the origination location to the destination location along the route, wherein the airspace volume is based on at least a portion of the route data and at least a portion of the vehicle data;
calculate a cost of the airspace volume; and
provide the cost to a user.

9. The system of claim 8, wherein the data related to the route includes at least one of the following: route path, altitude, date, time, or duration.

10. The system of claim 8 or 9, wherein the data related to the vehicle includes at least one of the following: a user identifier, a vehicle identifier, a vehicle model, a lateral navigation system, a vertical navigation system, a positioning system, an altimetry system, a surveillance system, a communication system, a vehicle noise category, vehicle weight, a vehicle length, a vehicle width, a vehicle, height, a maximum speed, or a cruising speed.

11. The system of any of claims 8 to 10, wherein calculating the cost includes utilizing a dynamic pricing model that includes at least one of the following: current or expected use of airspace around the airspace volume by third parties.

12. The system of any of claims 8 to 11, wherein the logic further causes the system to perform at least the following:
provide a weighted assessment regarding calculation of the cost of the airspace volume.

13. A non-transitory computer-readable medium for providing conformance volume based airspace access, the non-transitory computer-readable medium including logic for execution by a computing device, the logic configured to cause the computing device to perform at least the following:
receive data related to a route for a vehicle from an origination location to a destination location;
receive data related to the vehicle that will traverse the route;
determine an airspace volume from the origination location to the destination location along the route, wherein the airspace volume is based on at least a portion of the route data and at least a portion of the vehicle data;
calculate a cost of the airspace volume;
provide the cost to a user;
receive a user request to secure the airspace volume for the vehicle; and
secure the airspace volume for the vehicle.

14. The non-transitory computer-readable medium of claim 13, wherein the data related to the vehicle includes at least one of the following: a user identifier, a vehicle identifier, a vehicle model, a lateral navigation system, a vertical navigation system, a positioning system, an altimetry system, a surveillance system, a communication system, a vehicle noise category, vehicle weight, a vehicle length, a vehicle width, a vehicle, height, a maximum speed, or a cruising speed.

15. The non-transitory computer-readable medium of claim 13 or 14, wherein the logic further causes the system to perform at least the following: provide a cap-and-trade mechanism that includes airspace volume credits that users can exchange.
